Europäisches Patentamt

(19) European Patent Office

Office européen des brevets

(11) Numéro de publication: **0 271 625**
**B1**

(12) **FASCICULE DE BREVET EUROPEEN**

(45) Date de publication du fascicule du brevet:
21.03.90

(21) Numéro de dépôt: 86402845.1

(22) Date de dépôt: 17.12.86

(51) Int. Cl.⁴: **F16B 39/02**

(43) Date de publication de la demande:
22.06.88 Bulletin 88/25

(45) Mention de la délivrance du brevet:
21.03.90 Bulletin 90/12

(84) Etats contractants désignés:
BE DE ES GB IT NL SE

(56) Documents cités:
FR-A- 2 143 291
FR-A- 2 551 148
FR-A- 2 583 473
US-A- 3 842 878

(54) Ecrou indesserrable perfectionné.

(73) Titulaire: **Etablissements SAINT - CHAMOND - GRANAT,
12, rue d'Epluches, F-95310 Saint Ouen l'Aumone(FR)**

(72) Inventeur: **Fauchet, Christian Roger Jacques, 5, rue des
Fonds de Cuves, F-95240 Cormeilles en Parisis(FR)**
Inventeur: **Rousselle, Reynald René Lucien, 31, rue
Benoît Frachon, F-78280 Guyancourt(FR)**

(74) Mandataire: **Chameroy, Claude et al, c/o Cabinet
Malemont 42, avenue du Président Wilson,
F-75116 Paris(FR)**

## Description

La présente invention concerne un écrou indesserrable, c'est-à-dire un écrou présentant un couple résistant au desserrage.

On sait que la résistance mécanique des assemblages est considérablement améliorée par l'effet d'une précharge aussi élevée que possible introduite par la mise sous tension des éléments de fixation, constitués le plus souvent par des éléments filetés. Dans ce cas, la mise sous tension de la vis est assurée par le couple de vissage, qui peut être obtenu à l'aide d'une clé ou d'une visseuse du type dynamométrique. Toutefois, cette solution nécessite des étalonnages réguliers du matériel et c'est pourquoi on préfère maintenant utiliser des systèmes de fixation produisant par eux-mêmes le couple de vissage recherché. On connaît ainsi des systèmes dans lesquels l'écrou comporte une partie d'entraînement qui est conçue pour se rompre lorsque l'on atteint un couple de vissage prédéterminé. De tels systèmes sont cependant relativement coûteux.

Par ailleurs, l'indesserrabilité des systèmes filetés est couramment assurée par une déformation permanente de l'écrou qui produit un couple résistant par frottement sur la vis. Or, lorsque l'on recherche une précharge élevée et déterminée dans l'assemblage, ce couple résistant s'oppose au couple de vissage et introduit donc un facteur de dispersion préjudiciable dans la tension effective de la vis.

La présente invention a pour but principal de remédier à ces inconvénients et, pour ce faire, elle a pour objet un écrou indesserrable qui se caractérise essentiellement en ce qu'il comprend, sur sa périphérie, un certain nombre de cannelures longitudinales à section semi-circulaire destinées à coopérer avec des billes d'entraînement portées par un outil de vissage approprié, lesdites billes provoquant, en fin de vissage, la formation d'une gorge circulaire par refoulement du métal situé entre les cannelures, ce qui entraîne une déformation radiale du filetage intérieur de l'écrou au niveau de ladite gorge.

Ainsi, le montage initial de l'écrou sur la vis se fait librement, c'est-à-dire sans aucun couple résistant, et n'influe donc pas sur le couple de vissage final. De plus, on peut avec un même écrou obtenir des couples de vissage déterminés différents, selon que tout ou partie des cannelures sont entraînées par un nombre égal ou inférieur de billes de l'outil de vissage. Enfin, l'indesserrabilité de l'écrou est obtenue automatiquement en fin de vissage lors de la formation de la gorge circulaire.

Selon une autre caractéristique de l'invention, l'écrou a une forme extérieure conique, la profondeur des cannelures allant en augmentant vers l'embase de l'écrou qui est pourvu du côté opposé d'un chambrage intérieur dont le diamètre est sensiblement supérieur à celui du sommet des filets de la vis associée.

De préférence également, l'écrou a une section conique au niveau des cannelures.

On peut ainsi réaliser plusieurs vissages successifs avec des couples croissants, ce qui est particulièrement intéressant dans le cas d'assemblages susceptibles d'une importante relaxation après le premier montage, par exemple lorsqu'il s'agit de matériaux plastiques ou de tôles avec produits d'interposition. Un ou plusieurs vissages sont d'abord effectués au niveau du chambrage, ce qui ne provoque pas de freinage de l'écrou, tandis que le dernier vissage est effectué au-delà du chambrage, assurant ainsi l'indesserrabilité du système.

Plusieurs formes d'exécution de l'invention sont décrites ci-après à titre d'exemples, en référence au dessin annexé dans lequel :

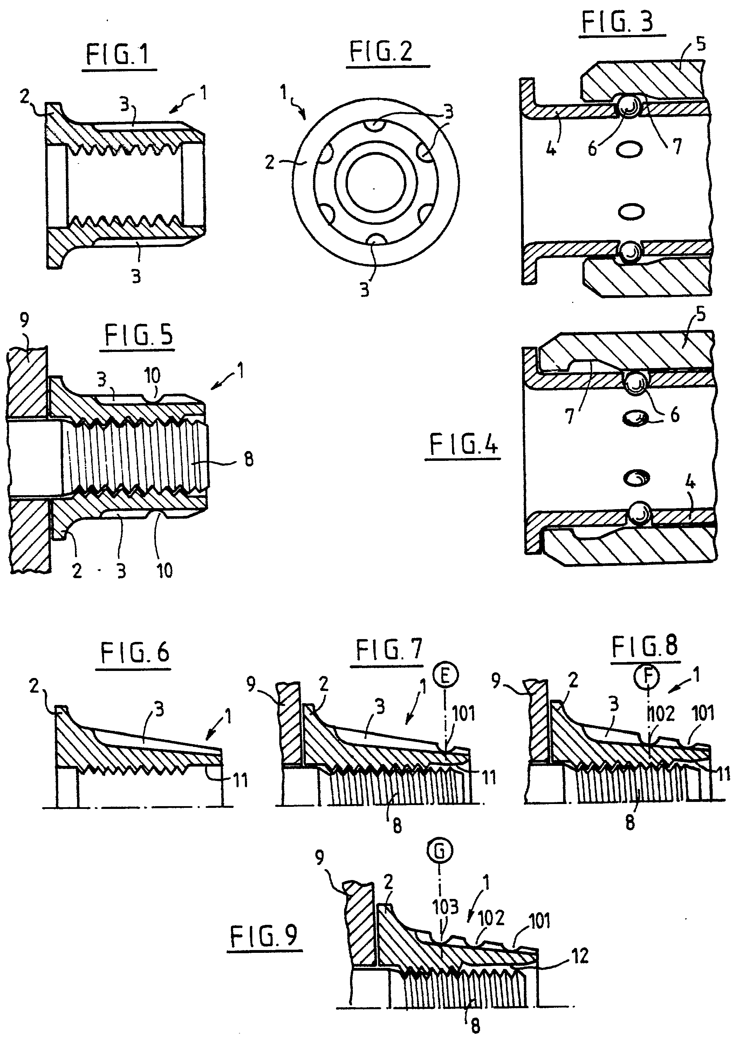

. la figure 1 est une vue en coupe axiale d'un écrou indesserrable conforme à l'invention ;
. la figure 2 est une vue en bout de cet écrou ;
. la figure 3 est une vue en coupe axiale de l'outil de vissage correspondant en position inactive ;
. la figure 4 est une vue en coupe axiale du même outil de vissage en position active ;
. la figure 5 est une vue en coupe axiale de l'écrou en fin de vissage sur une vis ;
. la figure 6 est une vue en coupe axiale d'une variante de réalisation de l'écrou selon l'invention ;
. la figure 7 est une vue en coupe axiale de cet écrou après un premier vissage sur une vis ;
. la figure 8 est une vue en coupe axiale de l'écrou après un deuxième vissage ; et
. la figure 9 est une vue en coupe axiale d'une autre variante de réalisation de l'écrou selon l'invention, permettant trois vissages successifs.

L'écrou 1 représenté sur les figures 1 et 2 est pourvu d'une embase 2 et corporte sur sa périphérie un certain nombre de cannelures longitudinales 3 qui sont ici au nombre de six. Ces cannelures sont disposées selon des génératrices régulièrement espacées de la surface de l'écrou et ont une section semi-circulaire.

L'outil de vissage correspondant, représenté sur les figures 3 et 4, se compose essentiellement d'un canon télescopique 4 coulissant dans un fourreau 5. Dans le canon 4 sont disposées un certain nombre de billes 6 qui peuvent s'éclipser dans une gorge de dégagement 7 du fourreau lorsque l'outil se trouve en position de repos, comme représenté sur la figure 3. Sous l'effet d'un effort axial exercé sur l'outil, le canon télescopique 4 s'enfonce dans le fourreau 5 et provoque le déplacement radial des billes 6, comme représenté sur la figure 4. Lesdites billes peuvent alors venir en prise dans les cannelures 3 de l'écrou 1.

La rotation de l'outil provoque ainsi le vissage libre de l'écrou 1 sur une vis telle que 8, jusqu'à ce que son embase 2 vienne au contact de la pièce à assembler 9, comme illustré sur la figure 5. Sous l'action d'un couple suffisant, les billes 6 provoquent alors la déformation plastique du métal constituant l'écrou et créent à sa surface une gorge circulaire 10. Simultanément, le déplacement du métal induit une déformation locale du filetage intérieur de l'écrou au niveau de la gorge 10, ce qui se traduit par un freinage efficace sur le filet correspondant de la vis 8, rendant ainsi le système indesserrable sans l'action d'un couple contraire beaucoup plus élevé.

En relachant l'effort axial exercé sur l'outil de vissage, le fourreau 5 recule par rapport au canon 4 et les billes 6 peuvent s'éclipser dans la gorge 7 prévue à cet effet, ce qui permet de dégager facilement l'outil de l'écrou.

Le couple de vissage final est directement lié au couple nécessaire pour provoquer le début de déformation plastique du matériau de l'écrou. Il est conditionné par :

. la nature et les caractéristiques de résistance mécanique du matériau de l'écrou,

. le volume de métal résistant à la pression des billes, fonction de la forme et des dimensions relatives des billes et des cannelures, ainsi que du nombre relatif de billes et de cannelures en contact.

Ainsi, un même écrou présentant un nombre déterminé de cannelures peut être monté avec des couples différents selon que tout ou partie des cannelures sont entraînées par un nombre égal ou inférieur de billes dans l'outil de vissage.

On notera en outre que l'écrou selon l'invention permet un auto-contrôle aisé de l'assemblage après montage. En effet, la vue d'une gorge circulaire et uniforme 10 sur l'écrou est la garantie qu'un couple correct a été appliqué et que le système est devenu indesserrable par auto-freinage.

Dans la variante de réalisation représentée sur les figures 6 à 8, l'écrou a une forme extérieure conique et a également une section conique au niveau des cannelures 3, la profondeur de ces cannelures allant en augmentant au fur et à mesure que l'on s'approche de l'embase 2. De plus, l'écrou est pourvu, du côté opposé à l'embase 2, d'un chambrage profond 11, dont le diamètre est sensiblement supérieur à celui du sommet des filets de la vis associée 8.

Les outils de vissage correspondants, non représentés ici, comportent une entrée conique adaptée à la forme de l'écrou et sont caractérisées par une position plus ou moins profonde des billes par rapport à la face avant de l'outil.

Un premier vissage est effectué à l'aide d'un outil dont les billes se situent dans un plan

$\textcircled{E}$,

comme représenté sur la figure 7, la déformation plastique de l'écrou intervenant sous un couple $C_1$. La gorge circulaire 101 formée par les billes se trouve alors au niveau du chambrage 11 de l'écrou, de sorte qu'il n'y a aucun freinage de celui-ci sur le sommet des filets de la vis 8.

Après relaxation de l'assemblage (par exemple, fluage et polymérisation d'un produit d'interposition, fluage d'un matériau plastique ou d'un matériau composite, etc.), un second vissage peut être effectué à l'aide d'un outil dont les billes se situent dans un plan

$\textcircled{F}$,

comme représenté sur la figure 8. Du fait que d'une part la cannelure 3 présente en

$\textcircled{F}$

une profondeur supérieure à celle en

$\textcircled{E}$,

ce qui se traduit par un volume plus important de métal à déformer, et que d'autre part, le diamètre en fond de cannelure est supérieur en

$\textcircled{F}$

par rapport à

$\textcircled{E}$,

le couple $C_2$ sous lequel s'effectue la déformation plastique du métal est supérieur au couple $C_1$ du premier vissage, et permet d'assurer un resserrage efficace de l'assemblage. Par ailleurs, à la position

$\textcircled{F}$,

la gorge circulaire 102 formée par les billes sous l'action du couple $C_2$ induit une déformation raidale du métal de l'écrou qui se situe au niveau des filetages intérieur de l'écrou et extérieur de la vis, provoquant ainsi un freinage efficace de l'un par rapport à l'autre.

Dans l'autre variante de réalisation représentée sur la figure 9, l'écrou 1 est analogue à celui représenté sur les figures 6 à 8, mais comporte un chambrage encore plus profond 12. On peut ainsi réaliser deux vissages successifs dans les plans

$\textcircled{E}$

et

$\textcircled{F}$,

sans qu'il y ait auto-freinage.

Un troisième et dernier vissage peut alors être effectué dans un plan

$\textcircled{G}$

sous un couple $C_3$ supérieur à $C_2$, avec formation d'une gorge circulaire 103 qui provoque un auto-freinage final de l'écrou par déformation radiale de son filetage intérieur.

L'auto-contrôle de tels écrous après montage est caractérisé par le nombre et la position des gorges circulaires telles que 101, 102 et 103 provoquées par les vissages successifs.

**Revendications**

1. Ecrou indesserrable, caractérisé en ce qu'il comprend, sur sa périphérie, un certain nombre de cannelures longitudinales (3) à section semi-circulaire destinées à coopérer avec des billes d'entraînement (6) portées par un outil de vissage approprié, lesdites billes (6) provoquant, en fin de vissage, la formation d'une gorge circulaire (10) par refoulement du métal situé entre les cannelures (3), ce qui entraîne une déformation radiale du filetage intérieur de l'écrou (1) au niveau de ladite gorge (10).

2. Ecrou indesserrable selon la revendication 1, caractérisé en ce qu'il a une forme extérieure conique, la profondeur des cannelures (3) allant en augmentant vers l'embase (2) de l'écrou (1) qui est pourvu du côté opposé d'un chambrage intérieur (11, 12) dont le diamètre est sensiblement supérieur à celui du sommet des filets de la vis associée (8).

3. Ecrou indesserrable selon la revendication 2, caractérisé en ce qu'il a une section conique au niveau des cannelures (3).

## Patentansprüche

1. Nicht lösbare Mutter, dadurch gekennzeichnet, daß sie auf ihrem Umfang mit einer gewissen Anzahl von längs angeordneten Rillen (3), mit halbkreisförmigem Querschnitt versehen ist, die dazu vorgesehen sind im Eingriff mit Antriebskugeln (6) zu stehen, die von einem geeigneten Werkzeug aufgebracht werden, wobei die Kugeln (6) am Ende des Anzugs durch Stauchung des zwischen den Rillen (3) vorhandenen Metalls, die Bildung einer keilförmigen Auskehlung (10) verursachen, wodurch eine radiale Verformung des inneren Gewindes der Mutter (1) in Höhe der gesagten Auskehlung (10) erzeugt wird.

2. Nicht lösbare Mutter entsprechend Anspruch 1, dadurch gekennzeichnet, daß ihre äußere Form konisch ist, wobei die Tiefe der Rillen (3) zum Bund (2) der Mutter (1) zunimmt, und an der Gegenseite eine Kammer (11, 12) vorgesehen ist, deren Durchmesser spürbar größer ist als die Gewindespitze der dazugehörigen Schraube (8).

3. Nicht lösbare Mutter entsprechend Anspruch 2, dadurch gekennzeichnet, daß sie in Höhe der Rillen (3) einen konischen Querschnitt besitzt.

## Claims

1. A self-locking nut, characterized in that it comprises, at its periphery, a number of longitudinal channels (3) with semi-circular section intended to cooperate with drive balls (6) carried by an appropriate tightening tool, said balls (6) causing, at the end of tightening, the formation of a circular groove (10) by forcing back the metal situated between the channels (3), which results in a radial deformation of the inner threads of the nut (1) at the level of said groove (10).

2. The self-locking nut according to claim 1, characterized in that it comprises a tapered external shape, with the channels (3) increasing in depth towards the base (2) of the nut (1), which is provided, on the opposite side, with an internal recess (11, 12) having a diameter substantially greater than that of the crest of the threads of the associated screw (8).

3. The self-locking nut according to claim 2, characterized in that it comprises a tapered section at the level of the channels (3).

EP 0 271 625 B1

FIG.1  FIG.2  FIG.3  FIG.4  FIG.5  FIG.6  FIG.7  FIG.8  FIG.9